# EUROPEAN PATENT APPLICATION

(11) **EP 4 492 515 A1**
(43) Date of publication of application: **15.01.2025**
(21) Application number: 24159720.2
(22) Date of filing: 26.02.2024
(51) Int. Cl.: H01M 10/04

(54) **MANDREL ASSEMBLY FOR SECONDARY BATTERY CELL STACK MANUFACTURING EQUIPMENT**

(30) Priority: 13.07.2023 KR 20230090860
(71) Applicant: WONIK PNE CO., LTD., Suwon-si, Gyeonggi-do 16648 (KR)
(72) Inventor: SONG, Nakhyung, Suwon-si, Gyeonggi-do 16648 (KR); PARK, Sunggyu, Suwon-si, Gyeonggi-do 16648 (KR)
(74) Representative: Zimmermann, Tankred Klaus

(57) **Abstract**

The present disclosure discloses a mandrel assembly structure for an apparatus for manufacturing a cell stack for a secondary cell, which can prevent an alignment failure of an electrode and damage to the electrode attributable to an assembly tolerance and moving deviation of a mandrel when a cell stack for a secondary cell is manufactured. The mandrel assembly includes a moving block, a mandrel mounting part provided with a mandrel and mounted on the moving block, a hinge part configured to rotatably couple the mandrel mounting part to the moving block, and a pressurization part configured to elastically pressurize one side of the mandrel mounting part so that the mandrel is tilted at a predetermined angle to an electrode plate.

## Description

### [Technical Field]

The present disclosure relates to an apparatus for manufacturing a cell stack for a secondary cell and, more particularly, to a mandrel assembly for an apparatus for manufacturing a cell stack for a secondary cell, which can prevent electrodes from being misaligned or damaged in a process of stacking the electrodes according to the moving up and down of a mandrel.

### [Background Art]

A secondary cell is applied to various technical fields throughout the industry due to an advantage in that the secondary cell can be reused through repeated charging and discharging. For example, the secondary cell is widely used as an energy source for advanced electronic devices, such as wireless mobile devices, and also attracts public attention as a driving source for an electric vehicle.

The secondary cell is fabricated in a form in which a cell stack having a form in which a positive plate, a separation film, and a negative plate have been sequentially stacked has been dipped into an electrolyte solution and sealed. In this case, an apparatus for manufacturing a cell stack is used as equipment for stacking the positive plate, the separation film, and the negative plate so that the separation film is interposed between the positive plate and the negative plate.

In the apparatus for manufacturing a cell stack, in order to manufacture the cell stack, electrode plates (i.e., the positive plate and the negative plate) and the separation film are sequentially stacked on a stacking table through Z folding or in the form of individual pieces. In this case, a mandrel is disposed in the periphery of the stacking table in an opposite direction thereof. The mandrel and the stacking table are each constructed to be moved up or down by a servo motor.

The electrode plates are pressed and stacked through the mandrel so that the electrode plates are not moved in the process of stacking the electrode plates on the stacking table. In this case, when the mandrel moves down and presses the electrode plates, if the mandrel slightly more moves downward than a set downward distance, a bending phenomenon in which the mandrel is upward bent may occur because the mandrel impacts on an edge portion of the stacking table. When the bending of the mandrel occurs as described above, there may be a problem in that the electrode plates are twisted because the mandrel does not properly hold the electrode plates. Even worse, there may be a problem in that the electrode plates are detached.

Furthermore, in the process of the mandrel moving down and pressing the electrode plates, if the downward distance of the mandrel is slightly greater than a set distance, there may be a problem in that a mandrel mark occurs in the electrode plates because pressure that presses the electrode plates is increased.

### [Summary of Invention]

### [Technical Problem]

An object of the present disclosure is to provide a mandrel assembly for an apparatus for manufacturing a cell stack, which can prevent the bending phenomenon of a mandrel attributable to a contact with a stacking table in a process of stacking electrodes.

Another object of the present disclosure is to provide a mandrel assembly for an apparatus for manufacturing a cell stack for a secondary cell, which can prevent the misalignment and detachment of electrodes, which occur because a mandrel does not properly press the electrodes in a process of stacking the electrodes.

Still another object of the present disclosure is to provide a mandrel assembly for an apparatus for manufacturing a cell stack for a secondary cell, which can prevent damage to electrodes which occurs because a mandrel excessively presses the electrodes in a process of stacking the electrodes.

### [Solution to Problem]

According to an aspect of the present disclosure, a mandrel assembly includes a moving block, a mandrel mounting part provided with a mandrel and mounted on the moving block, a hinge part configured to rotatably couple the mandrel mounting part to the moving block, and a pressurization part configured to elastically pressurize one side of the mandrel mounting part so that the mandrel is tilted at a predetermined angle to an electrode plate.

The mandrel assembly may further include a contact stage extended and formed on a rear side of the mandrel mounting part and configured to come into contact with the pressurization part.

The hinge part may include a ball hinge coupled to the bottom of the mandrel mounting part and a hinge housing fixed to the moving block and having the ball hinge rotatably received therein.

A guide member configured to provide guidance to a rotation direction of the mandrel mounting part may be installed in the moving block.

A ball hinge coupling part that is coupled to the ball hinge through the ball hinge may be formed at the bottom of the mandrel mounting part.

The mandrel assembly may further include a coupling member having a greater diameter than the ball hinge coupling part and coupled to the bottom of the ball hinge.

A gap may be formed between the bottom of the mandrel mounting part and the top of the moving block.

The pressurization part may pressurize the mandrel mounting part by using the air.

The pressurization part may include a support fixed to the top of the moving block disposed under the contact stage and an air cushion made of an elastically deformable material, coupled to the support, filled with air, and configured to come into contact with the bottom of the contact stage.

The mandrel assembly may further include an air supply means for supplying the air into the air cushion.

### [Advantageous Effects of Invention]

According to the mandrel assembly structure for an apparatus for manufacturing a cell stack for a secondary cell according to an embodiment of the present disclosure, there are advantages in that the bending phenomenon of the mandrel, which occurs because the mandrel excessively moves down and comes into contact with an edge portion of the stacking table in a process of stacking an electrode plate, can be prevented and a phenomenon in which the electrode plate is misaligned and detached, which occurs because the mandrel does not properly press the electrode plate due to the bending of the mandrel, can also be prevented.

Furthermore, it is possible to prevent damage to an electrode plate, which occurs because the mandrel excessively presses the electrode plate in a process of stacking the electrode plate. In particular, although the mandrel moves down at a set distance or more and pressure that presses the electrode plate is increased, the mandrel mounting part is rotated in a direction in which the mandrel mounting part offsets the pressure and prohibits the electrode plate from being excessively pressed. Accordingly, it is possible to prevent the electrode plate from being damaged by being excessively pressed by the mandrel.

Furthermore, if the mandrel mounting part is rotated in the direction in which the mandrel mounting part offsets pressure that is applied to an electrode plate in a contact process between the mandrel and the electrode plate, it is possible to prevent the mandrel from falling back due to the excessive rotation of the mandrel mounting part because the rotation of the mandrel mounting part is limited within a predetermined range by the pressurization part that is disposed on the rear side of the mandrel mounting part. Accordingly, it is possible to prevent the degradation of clamping performance attributable to a reduction of a contact area between the mandrel and the electrode plate.

Furthermore, if the mandrel mounting part is rotated in the direction in which the mandrel mounting part offsets pressure that is applied to an electrode plate in a contact process between the mandrel and the electrode plate, the mandrel can come into contact with the electrode plate in a wide area while being deformed within its elastic behavior range because the air cushion is elastically compressed by the contact stage of the mandrel mounting part and the rotation of the mandrel mounting part is limited within a predetermined angle range. Accordingly, it is possible to prevent the electrode plate from being misaligned or detached during their stacking process because a function for clamping the electrode plate, that is, a major function of the mandrel, is smoothly performed.

Furthermore, it is possible to absorb and correct a mechanical assembly tolerance and moving deviation of the mandrel by using the hinge part and the pressurization part structure capable of freely rotating the mandrel mounting part within a predetermined angle range although the assembly tolerance and moving deviation of the mandrel occur.

Furthermore, it is possible to effectively correct the pressure balance of the mandrel that is applied to an electrode plate because the pressurization part is constructed by using the air cushion capable of elastic expansion and contraction and the rate of expansion of the air cushion is adjusted by adjusting the amount of air that is introduced into the air cushion through the external air supply means.

### [Brief Description of Drawings]

FIG. 1 is a perspective view illustrating a form in which a mandrel assembly according to an embodiment of the present disclosure has been disposed in the periphery of a stacking table.
FIG. 2 is a front view of the mandrel assembly in FIG. 1, which is viewed in an X axis direction.
FIG. 3 is a perspective view illustrating a mandrel assembly according to an embodiment of the present disclosure.
FIG. 4 is a cutaway perspective view illustrating an internal structure of a mandrel assembly according to an embodiment of the present disclosure.
FIG. 5 is a cross-sectional view of the mandrel assembly in the X axis direction according to an embodiment of the present disclosure.
FIG. 6 is a cross-sectional view of the mandrel assembly in a Y axis direction according to an embodiment of the present disclosure.
FIG. 7 is a diagram illustrating a form in an initial state in which a mandrel mounting part has been pressurized through a pressurization part and a mandrel has been tilted at a predetermined angle with respect to an electrode plate.
FIG. 8 is an operational diagram illustrating a process of the mandrel assembly sequentially moving in the Y axis and Z axis directions and the mandrel coming into contact with the electrode plate.
FIG. 9 is a diagram illustrating the size of a contact area between the mandrel and the electrode plate upon stacking work of an electrode plate using a conventional mandrel assembly.
FIG. 10 is a diagram illustrating the size of a contact area between the mandrel and the electrode plate upon stacking work of the electrode plate using the mandrel assembly according to an embodiment of the present disclosure.

### [Description of Embodiments]

Hereinafter, preferred embodiments of the present disclosure are described in detail with reference to the accompanying drawings.

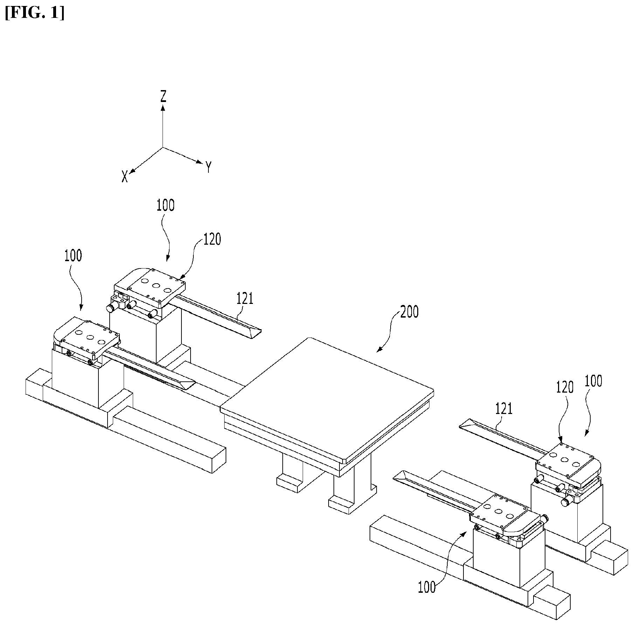

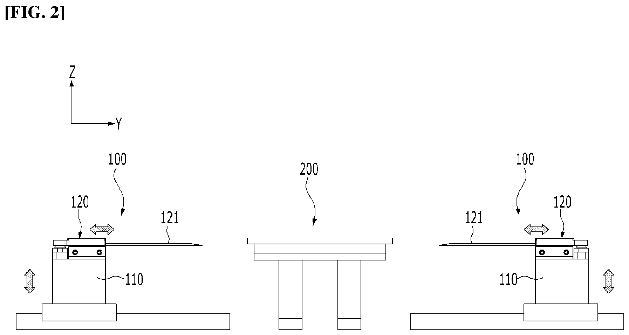

FIG. 1 is a perspective view illustrating a form in which a mandrel assembly according to an embodiment of the present disclosure has been disposed in the periphery of a stacking table in an apparatus for manufacturing a cell stack for a secondary cell. FIG. 2 is a front view of the mandrel assembly in FIG. 1, which is viewed in an X axis direction.

Referring to FIGS. 1 and 2, an apparatus for manufacturing a cell stack for a secondary cell to which the mandrel assembly according to an embodiment of the present disclosure is applied is an apparatus for manufacturing a cell stack for a secondary cell in a way to stack a positive plate, a negative plate, and a separation film so that the separation film is interposed between the positive plate and the negative plate.

The apparatus for manufacturing a cell stack for a secondary cell includes a mandrel assembly 100 that downward presses and grasps edge portions of an electrode plate (or the separation film) on one side and the other side thereof in the periphery of a stacking table 100 in which electrode plates (i.e., the positive plate and the negative plate) and the separation film are stacked.

Four mandrel assemblies 100 according to another embodiment of the present disclosure are disposed in pairs to be symmetrical to each other while facing each other in the periphery of the stacking table 200. The mandrel assembly 100 is moved in an X, Y, or Z axis direction through moving means, such as a servo motor or a cylinder, upon stacking work of the electrode plate and the separation film, and prevents the electrode plate (or the separation film) placed on the stacking table 200 from collapsing in a cell stack stacking process by alternately pressing the electrode plate (or the separation film) by using a mandrel 121.

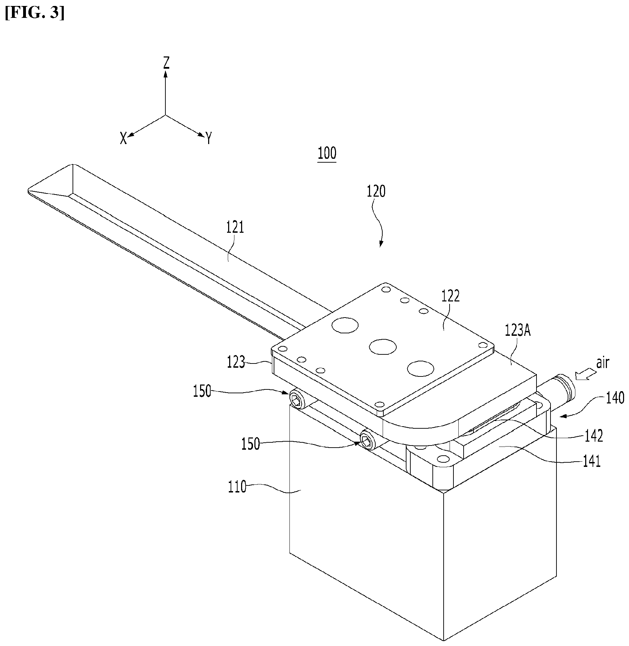

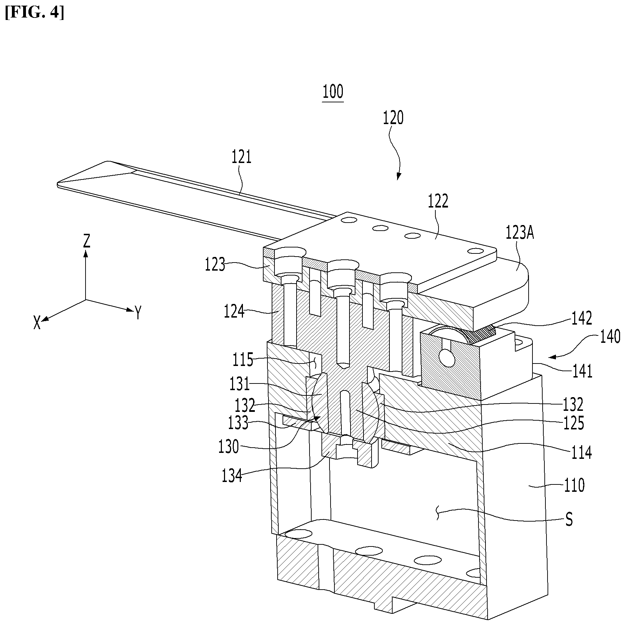

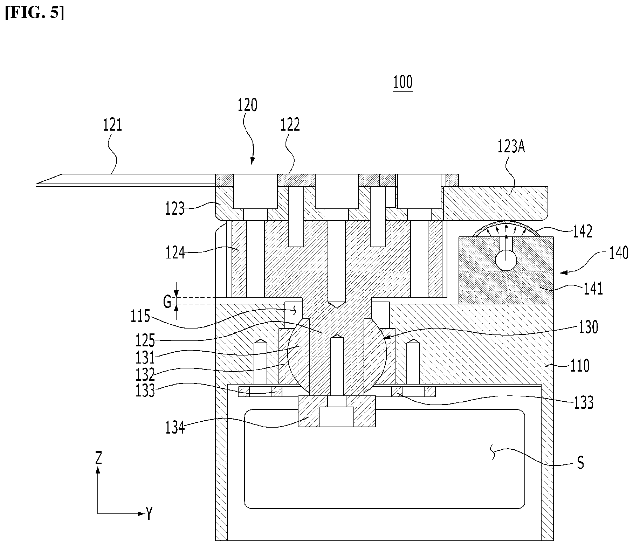

FIGS. 3 to 6 illustrate external and internal structures of a mandrel assembly according to another embodiment of the present disclosure.

Referring to FIGS. 3 to 6, the mandrel assembly 100 may be constructed to include a moving block 110, a mandrel mounting part 120, a hinge part 130, and a pressurization part 140.

The moving block 110 is disposed in the periphery of the stacking table 200, and may be constructed to be selectively movable in the X, Y, or Z axis direction by a servo motor or a cylinder. For example, the moving block 110 may be constructed to be movable in a horizontal direction (i.e., the X axis direction) and in forward and backward directions (the Y axis direction) by the servo motor and to be movable in up and down directions (i.e., the Z axis direction) by the servo motor. In this case, various moving means (e.g., a cylinder) may be used instead of the servo motor.

The mandrel mounting part 120 has a construction in which the mandrel 121 has been mounted on one side thereof. That is, the mandrel mounting part 120 includes the mandrel 121 on one side thereof so that the mandrel 121 can press a top edge portion of an electrode plate E placed on the stacking table 200 upon stacking work of the electrode plate E.

The mandrel mounting part 120 is rotatably coupled at the top of the moving block 110. That is, the mandrel mounting part 120 may be rotatably coupled at a predetermined angle centering around the hinge part 130 at the top of the moving block 110.

The pressurization part 140 is disposed at a location that is spaced apart from the hinge part 130, that is, the center of rotation of the mandrel mounting part 120, to a rear side thereof at a predetermined distance, and upward pressurizes the mandrel mounting part 120. That is, the pressurization part 140 is disposed in a space between the mandrel mounting part 120 and the moving block 110 at the location that is spaced apart from the hinge part 130 to the rear side at the predetermined distance, and may upward pressurize the mandrel assembly 100 so that the mandrel mounting part 120 is rotated at a predetermined angle centering around the hinge part 130.

The pressurization part 140 is fixed at the top of the moving block 110, and may provide pressurization that enables the mandrel mounting part 120 to maintain the state in which the mandrel mounting part 120 has been rotated at a predetermined angle centering around the hinge part 130 by upward pressurizing a rear side of the mandrel mounting part 120.

The pressurization part 140 may be constructed to be elastically deformed in the up and down directions (i.e., the Z axis direction). Various forms may be applied to the pressurization part 140. In an embodiment of the present disclosure, an air cushion 142 capable of elastic expansion and contraction in the up and down directions is applied as the pressurization part 140. The air cushion 142 is described in detail later.

The pressurization part 140 may elastically pressurize the rear side of the mandrel mounting part 120 so that the mandrel 121 provided on the front side of the mandrel mounting part 120 maintains a tilted form while forming a predetermined angle along with the electrode plate E stacked on the stacking table 200.

The mandrel mounting part 120 has a construction including an upper plate 122, a lower plate 123, and a rotation body 124.

The upper plate 122 is disposed at the top of the mandrel mounting part 120. The mandrel 121 for the clamping of the electrode plate E is provided on a front side of the upper plate 122. The mandrel 121 is formed integrally with the upper plate 122. In this case, the mandrel 121 may be formed to have the same thickness (or height) as the upper plate 122 for easy of manufacturing, but the present disclosure is not essentially limited thereto.

The lower plate 123 is disposed under the upper plate 122. The lower plate 123 is formed to have a greater length than the upper plate 122 in the Y axis direction. That is, the lower plate 123 forms a structure that has been more extended toward a rear side thereof (i.e., a side opposite to the mandrel) than the length of the upper plate 122 by a predetermined length so that the lower plate 123 may elastically come into contact with the pressurization part 140 that is fixed to the top of the moving block 110.

The lower plate 123 includes a contact stage 123A that is extended and formed from a rear end of the upper plate 122 to the rear side thereof by a predetermined length and that comes in direct contact with the pressurization part 140. Accordingly, the pressurization part 140 may rotate the mandrel mounting part 120 around the hinge part 130 in the up and down directions (i.e., the Z axis direction) by upward elastically pressurizing the contact stage 123A of the lower plate 123.

The lower plate 123 may be formed to have a greater thickness (or height) than the upper plate 122. The pressurization part 140 rotates the entire mandrel mounting part 120 by upward pressurizing the contact stage 123A that has been extended and formed on the rear side of the lower plate 123. In this case, the lower plate 123 may be formed to have a greater thickness than the upper plate 122 so that sufficient stiffness for a rotation movement of the mandrel mounting part 120 is secured.

The rotation body 124 is disposed under the lower plate 123. The rotation body 124 is a portion that constitutes a substantial body of the mandrel mounting part 120. The rotation body 124 is fastened to the lower plate 123 and the upper plate 122 by a bolt (not illustrated), and forms a structure for the mandrel mounting part 120, which has been integrated as one structure.

The rotation body 124 is rotatably coupled to the moving block 110 through the hinge part 130. The rotation body 124 forms a downward extended structure so that the bottom of the rotation body 124 is connected to the hinge part 130 through an upper area of the moving block 110. That is, a ball hinge coupling part 125 that is coupled to a ball hinge 131 through the upper area of the moving block 110 is formed in the rotation body 124. A detailed coupling structure between the rotation body 124 and the hinge part 130 is described in detail later.

The mandrel mounting part 120 forms a structure that has been upward spaced from the top of the moving block 110 by a predetermined gap G so that the mandrel mounting part 120 is rotated and moved at a predetermined angle centering around the hinge part 130 through upward pressurization of the pressurization part 140.

That is, the gap G that has been spaced in the up and down directions by a predetermined distance is formed between the bottom of the rotation body 124 of the mandrel mounting part 120 and the top of the moving block 110 so that the mandrel mounting part 120 is rotated and moved in the up and down directions (i.e., the Z axis direction) in a predetermined angle range.

The mandrel mounting part 120 may perform a rotation movement on the moving block 110 by the height of the gap G in the up and down directions centering around the hinge part 130 due to the gap G that has been formed between the bottom of the rotation body 124 and the top of the moving block 110 as described above.

The hinge part 130 couples the mandrel mounting part 120 so that the mandrel mounting part 120 can be rotated and moved with respect to the moving block 110. The hinge part 130 may be constructed in various forms. However, in an embodiment of the present disclosure, a ball hinge (or pivot hinge) structure in which the mandrel mounting part 120 can maintain a fixed state while freely rotating in all directions has been applied to the hinge part 130.

Specifically, the hinge part 130 according to an embodiment includes the ball hinge 131 coupled to the bottom of the mandrel mounting part 120 and a hinge housing 132 that is fixed within the moving block 110 so that the ball hinge 131 is rotatably received in the hinge housing 132.

The ball hinge 131 has an appearance of a ball structure which may be freely rotated in several directions. The ball hinge 131 is coupled to a ball hinge coupling part 125 that is formed in a lower part of the rotation body 124.

The ball hinge coupling part 125 has a cylindrical shape, and is extended and formed downward from the rotation body 124. The ball hinge coupling part 125 is disposed in an internal space of a passage 115 that penetrates the upper area of the moving block 110 in the up and down directions. The ball hinge coupling part 125 downward penetrates the inside of the ball hinge 131 in the internal space of the passage 115 of the moving block 110, and is coupled to the ball hinge 131 by a bolt (not illustrated).

The ball hinge 131 is rotatably received in the hinge housing 132. That is, the ball hinge 131 is received within the hinge housing 132, and is rotatably coupled to an inner surface of the hinge housing 132 while forming a surface contact with the inner surface of the hinge housing 132.

The hinge housing 132 is fixed to an inner surface of the passage 115 that communicates with a space part S formed within the moving block 110 in the up and down directions (i.e., the Z axis direction). The hinge housing 132 is provided as a pair, and the pair of hinge housings 132 is disposed to face each other with the ball hinge 131 interposed therebetween within the passage 115 of the moving block 110. The hinge housing 132 has an inner surface shape corresponding to an outer surface shape of the ball hinge 131, and comes into surface contact with an outer surface of the ball hinge 131.

The hinge housing 132 is supported through a fixing plate 133 that is coupled to the periphery of a lower part of the passage 115 within the space part S of the moving block 110. That is, the hinge housing 132 is prevented from being detached from the passage 115 to the lower part of the passage 115 because the hinge housing 132 is supported through a part of the fixing plate 133 coupled to the top of the space part S in the periphery of the lower part of the passage 115.

A coupling member 134 is disposed under the ball hinge 131. The coupling member 134 has a greater diameter than the ball hinge coupling part 125, and is coupled to the ball hinge coupling part 125 through a bolt (not illustrated) in the state in which the coupling member 134 has faced the bottom of the ball hinge coupling part 125. The coupling member 134 functions to prevent the ball hinge 131 from being downward detached from the ball hinge coupling part 125. The coupling member 134 is rotated while operating in conjunction with the ball hinge 131 and the ball hinge coupling part 125 upon rotation movement of the mandrel mounting part 120.

In this case, unlike in the embodiment, the ball hinge 131 and the ball hinge coupling part 125 may be constructed to maintain a coupling force even without using the coupling member 134. For example, a screw thread may be formed in an outer surface of the ball hinge coupling part 125 having a cylindrical shape and a screw groove corresponding to the screw thread may be formed in an inner circumference surface of the ball hinge 131 so that the ball hinge 131 is constructed to be screwed onto the outer surface of the ball hinge coupling part 125. If the ball hinge 131 and the ball hinge coupling part 125 are constructed as described above, a robust coupling force can be maintained between the ball hinge 131 and the ball hinge coupling part 125 even without using the coupling member 134.

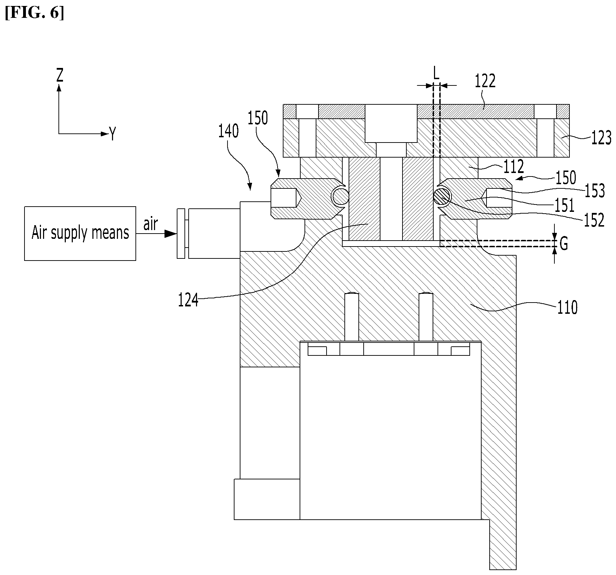

As illustrated in FIG. 6, a pair of protrusion stages 112 that upward protrudes in a form in which the pair of protrusion stages 112 surrounds both sides of the rotation body 124 provided in the mandrel mounting part 120 is formed in an upper part of the moving block 110.

The pair of protrusion stages 112 is disposed in a form in which the pair of protrusion stages 112 is spaced apart from each other and faces each other in the horizontal direction (i.e., the X axis direction) at the upper part of the moving block 110. The pair of protrusion stages 112 provides guidance to and simultaneously restricts both sides of the rotation body 124 upon rotation movement of the mandrel mounting part 120 so that the mandrel mounting part 120 may perform a rotation movement only in the up and down directions (i.e., the Z axis direction).

Accordingly, although the ball hinge structure capable of free rotation in all directions is applied to the hinge part 130, a movement of the rotation body 124 in the up and down directions (i.e., the Z axis direction) is possible, but a movement of the rotation body 124 in the horizontal direction (i.e., the X axis direction) is restricted by the pair of protrusion stages 112 that is disposed to be spaced apart from each other in the X axis direction of the moving block 110. Accordingly, the mandrel mounting part 120 may perform a rotation movement only in one direction (i.e., up and down).

In this case, both sides of the rotation body 124 and inner surfaces of the pair of protrusion stages 112 may be disposed to be spaced apart from each other with predetermined clearance L so that the rotation body 124 can smoothly perform a rotation movement in the up and down directions. As the clearance L for the smooth rotation movement of the rotation body 124 is formed between both sides of the rotation body 124 and the inner surfaces of the pair of protrusion stages 112 as described above, the mandrel mounting part 120 may move in the horizontal direction (i.e., the X axis direction) by the clearance upon rotation movement of the mandrel mounting part 120 in the up and down directions (i.e., the Z axis direction).

For this reason, in the mandrel assembly 100 according to an embodiment of the present disclosure, in order to suppress the movement of the mandrel mounting part 120 in the horizontal direction, guide members 150 that provide guidance to the movement of the mandrel mounting part 120 and that may suppress the movement of the mandrel mounting part 120 in the horizontal direction while coming into direct contact with both sides of the rotation body 124 are installed in the protrusion stages 112 on both sides of the moving block 110.

The guide member 150 includes a body 151 having a screw thread formed in an outer circumference surface thereof and a rolling ball 152 that is rotatably coupled to an end of the body 151 on one side thereof. In this case, the rolling ball 152 is coupled to the end of the body 151 in the form of a freely rotatable structure as in a common ballpoint structure. Furthermore, a nut groove 153 having a polygonal structure is formed at an end of the body 151 on the other side thereof so that the guide member 150 can be easily fastened to the protrusion stages 112 by using a tool.

A total of four guide members 150 each formed to have such a structure are installed in the protrusion stages 112 at the upper part of the moving block 110 on both sides thereof in a form in which the four guide members 150 face each other in pairs. That is, the guide members 150 may be fastened so that the bodies 151 in each of which the screw thread has been formed penetrate the protrusion stages 112 in the X axis direction and the rolling balls 152 provided in the bodies 151 come into contact with both sides of the rotation body 124.

Accordingly, upon rotation movement of the mandrel mounting part 120, in the guide members 150, the rolling balls 152 each provided at the end of the body 151 on one side thereof perform rolling movements while coming into contact with both sides of the rotation body 124. Accordingly, the mandrel mounting part 120 can smoothly perform a rotation movement in the up and down directions (i.e., the Z axis direction), but a movement of the mandrel mounting part 120 in the horizontal direction (i.e., the X axis direction) can be suppressed through the rolling balls 152 of the guide members 150 that come into contact with both sides of the rotation body 124.

The mandrel assembly 100 includes the pressurization part 140 that provides upward pressurization so that the mandrel mounting part 120 is rotated around the hinge part 130. The pressurization part 140 is disposed at an upper location that is spaced from the hinge part 130, that is, the center of rotation of the mandrel mounting part 120, to the rear side of the mandrel mounting part 120 at a predetermined distance. The pressurization part 140 provides upward pressurization for the rotation of the mandrel mounting part 120 on the rear side of the mandrel mounting part 120, and is thus responsible for a function that enables the mandrel mounting part 120 to be rotated around the hinge part 130 so that the mandrel 121 is tilted while forming a horizontal face parallel to the electrode plate E at a predetermined angle.

In an embodiment, the pressurization part 140 may upward pressurize the contact stage 123A of the mandrel mounting part 120 by using the air that is provided from the outside. Specifically, the pressurization part 140 includes a support 141 that is fixed to the top of the moving block 110 disposed on the rear side of the mandrel mounting part 120 and the air cushion 142 that is coupled to the support 141 and that can be elastically expanded and contracted by the air that is provided from the outside.

The support 141 is fixed to the top of the moving block 110 disposed under the contact stage 123A of the mandrel mounting part 120. The support 141 is responsible for a function that supports the air cushion 142 on a lower side thereof and that holds the air cushion 142.

An air inlet (not indicated by a reference numeral) is provided on one side of the support 141 so that the air provided from the external air supply means 160 is introduced therein. An air passage (not illustrated) that communicates with the air inlet and along which the air introduced into the air inlet is moved is formed within the support 141. Furthermore, the air passage within the support 141 is connected to the air cushion 142. The air may be supplied into the air cushion 142. The air cushion 142 may be upward expanded by the air supplied through the air passage.

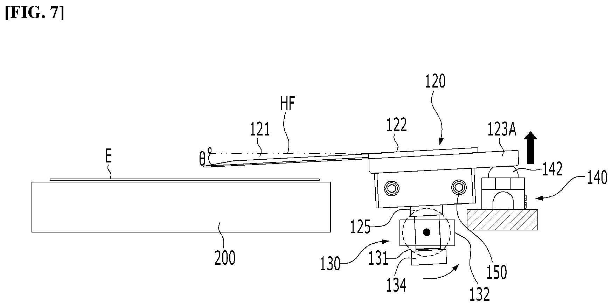

The air cushion 142 is installed at the top of the support 141 at the center thereof. The air cushion 142 is made of an elastically deformable material so that the air cushion 142 can be elastically expanded and contracted by the air that is supplied through the external air supply means 160. As the air is supplied into the air cushion 142 through the external air supply means 160, the air cushion 142 expands upward, and can rotate the mandrel mounting part 120 at a predetermined angle θ as illustrated in FIG. 7 by upward pressurizing the contact stage 123A of the mandrel mounting part 120.

The air cushion 142 is always filled with a predetermined amount of air therein, and thus is maintained in the expanded state. The air cushion 142 in the expanded state always maintains a contact state with the bottom of the contact stage 123A that is disposed on the rear side of the mandrel mounting part 120. In this case, when upward pressurization acts on the contact stage 123A due to the expansion of the air cushion 142, the mandrel mounting part 120 is rotated around the hinge part 130 by the expanded height of the air cushion 142.

In this case, the rotation angle of the mandrel mounting part 120 may be limited within a predetermined angle range because the mandrel mounting part 120 may be rotated counterclockwise by the height of the gap G that is formed between the bottom of the rotation body 124 and the top of the moving block 110. Furthermore, the rotation angle of the mandrel mounting part 120 may also be limited within a predetermined angle range because the mandrel mounting part 120 is rotated by the expanded height of the air cushion 142.

FIG. 7 illustrates a form in an initial state in which the mandrel mounting part has been pressurized through the air cushion and the mandrel has been tilted at a predetermined angle with respect to the electrode plate.

As illustrated in FIG. 7, as the air cushion 142 is expanded and upward pressurizes the contact stage 123A of the mandrel mounting part 120, the mandrel mounting part 120 is counterclockwise rotated around the hinge part 130 by the expanded height of the air cushion 142. Accordingly, the mandrel 121 that is disposed on the front side of the mandrel mounting part 120 is maintained in the state in which the mandrel 121 has been downward tilted at the angle θ at which the mandrel mounting part 120 has been rotated with respect to a horizontal face HF that is parallel to the electrode plate E. Such a state is set as the initial state of the mandrel assembly 100.

In this case, the tilt of the mandrel 121 that has been tilted downward from the horizontal face HF parallel to the electrode plate E, that is, the angle θ between the horizontal face HF and the mandrel 121, may be adjusted by adjusting the amount of the air that is supplied into the air cushion 142. That is, the rotation angle of the mandrel mounting part 120 is different because an expanded height of the air cushion 142 is different depending on the amount of the air that is introduced into the air cushion 142. Accordingly, the angle θ of the mandrel 121 for the electrode plate E can be freely adjusted within a predetermined angle range by adjusting the amount of the air that is supplied into the air cushion 142 through the air supply means 160.

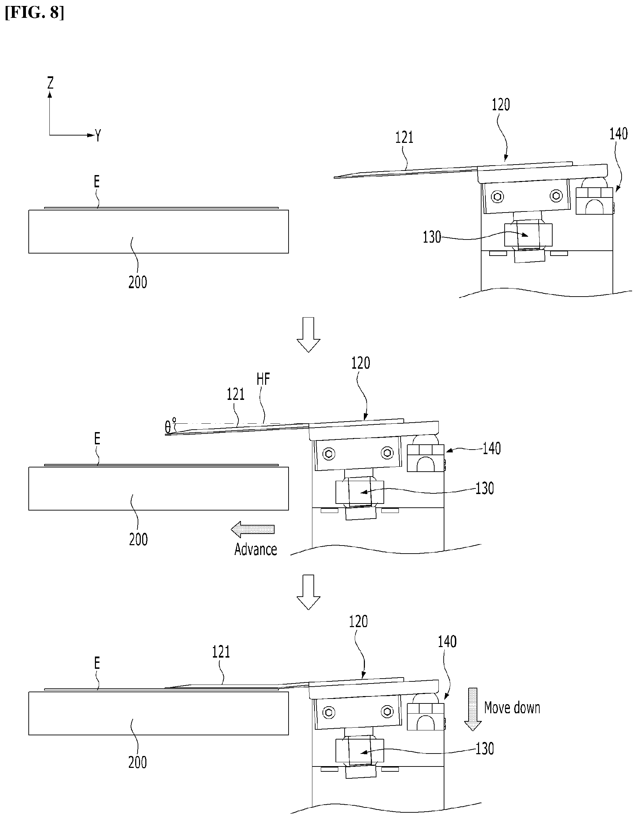

FIG. 8 sequentially illustrates a process of the mandrel assembly having the aforementioned structure according to an embodiment of the present disclosure moving to the stacking table and the mandrel coming into contact with the electrode plate.

If a stacking work is performed on the electrode plate E by using the mandrel assembly 100 according to an embodiment of the present disclosure, as illustrated in FIG. 8, the mandrel assembly 100 consecutively performs an operation of advancing in the Y axis direction at a set distance toward the stacking table 200 in which the electrode plate E has been seated and then moving down in the Z axis direction at the set distance. In the process of the mandrel assembly 100 moving down in the Z axis direction, the mandrel 121 provided on the front side of the mandrel mounting part 120 comes into contact with the top of the electrode plate E that is placed on the stacking table 200, and temporarily grasps the electrode plate E so that the electrode plate E is not moved during its stacking process by pressing the electrode plate E with predetermined pressurization.

In this case, the mandrel 121 in the initial state before the mandrel 121 comes into contact with the electrode plate E has been set in the state in which the mandrel 121 has been tilted at the set angle θ downward from the horizontal face HF that is parallel to the electrode plate E by upward pressurization of the pressurization part 140. Accordingly, when the mandrel assembly 100 moves down in order to grasp the electrode plate E, the front side portion of the mandrel 121 that has been downward tilted first comes into contact with the electrode plate E, and the rear side portion of the mandrel 121 then comes into contact with the electrode plate E.

In the process of the mandrel 121 moving down and coming into contact with the electrode plate E, the mandrel 121 is elastically deformed within its elastic range, and comes into contact with the electrode plate E while gradually expanding a contact area with the electrode plate E from a front side area of the mandrel 121 to a rear side area thereof. Accordingly, the mandrel 121 can smoothly perform the function for clamping the electrode plate E, that is, a major function of the mandrel 121, because the mandrel 121 presses and grasps the top of the electrode plate E in a wide contact area while elastically behaving within the elastic limit range as described above. Accordingly, a phenomenon in which the stacking of an electrode plate collapses due to the twisted alignment of the electrode plate or the detachment of the electrode plate because the mandrel does not properly grasp the electrode plate as in a conventional technology can be prevented.

Furthermore, in the process of the mandrel 121 moving down and pressurizing the top of the electrode plate E, pressurization that is applied to the electrode plate E through the mandrel 121 can be offset to some extent because the mandrel mounting part 120 is rotated at a predetermined angle in an opposite direction (i.e., a clockwise direction) centering around the hinge part 130 by repulsive power to the downward pressurization of the mandrel 121. Accordingly, although a reaction according to the pressurization acts on the mandrel 121 in the process of the mandrel 121 pressurizing the electrode plate E, the mandrel 121 can be prevented from being bent or deformed due to a pressurization impact on the electrode plate E or the stacking table 200 because the mandrel 121 elastically behaves only within the elastic limit range. Furthermore, a situation in which the electrode plate E is less pressed or severely pressed by the mandrel 121 also does not occur because the mandrel 121 is elastically deformed within the elastic behavior range, comes into contact with the electrode plate E in a wide contact area, and pressurizes the electrode plate E by pressing the electrode plate E.

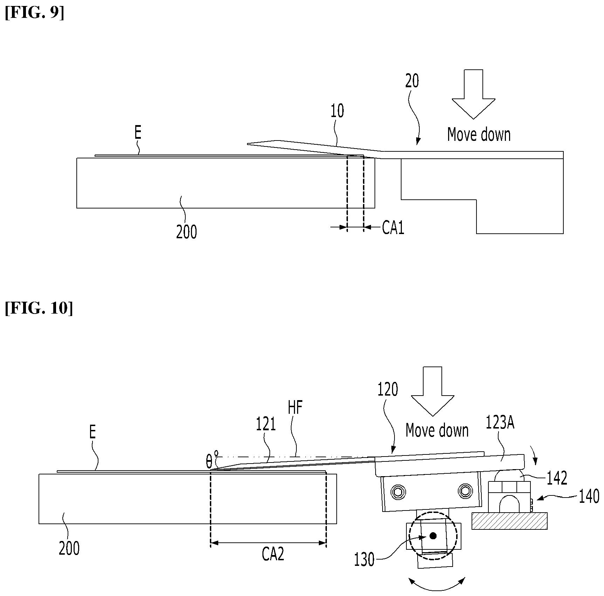

FIGS. 9 and 10 illustrate a comparison between the sizes of a contact area between the mandrel and the electrode plate upon stacking work of the electrode plate using the existing mandrel assembly and the mandrel assembly according to an embodiment of the present disclosure.

First, in the case of a conventional mandrel assembly 20 illustrated in FIG. 9, a mandrel 10 is set to be parallel to an electrode plate E, and there is no function for reducing pressurization when the mandrel 10 moves down and pressurizes the electrode plate E.

For this reason, upon stacking work of the electrode plate E, if the mandrel 10 moves down further from a set location (i.e., the top of the electrode plate) at the top of the electrode plate E, the mandrel 10 may come into contact with an edge portion of the stacking table 200 due to an assembly tolerance or moving deviation of the mandrel assembly 20 or a location deviation between the stacking table 200 and the mandrel assembly 20. At this time, when contact pressure between the mandrel 10 and the stacking table 200 becomes excessive, the mandrel 10 may be bent because the mandrel 10 is subjected to sintering deformation out of an elastic deformation critical point (or yield point). When the mandrel 10 is bent as described above, the alignment of the electrode plate E may be twisted because a contact area CA1 between the mandrel 10 and the electrode plate E is reduced and thus the electrode plate E is less pressed through the mandrel 10. Even worse, a phenomenon in which the electrode plate E is detached during its stacking work may occur.

In contrast, in the case of the mandrel assembly 100 illustrated in FIG. 10 according to an embodiment of the present disclosure, the mandrel mounting part 120 is rotated around the hinge part 130 by upward pressurization of the pressurization part 140. Accordingly, the mandrel 121 is disposed to have a default value having a form in which the mandrel 121 has been tilted at the predetermined angle θ downward from the horizontal face HF that is parallel to the electrode plate E.

Accordingly, when the mandrel 121 moves down from the top of the electrode plate E and comes into contact with the electrode plate E, the mandrel 121 can come into contact with the electrode plate E in a wide contact area CA2, in a way that the front side portion of the mandrel 121 first comes into contact with the electrode plate E and is elastically deformed and the rear side portion of the mandrel 121 then comes into contact with the electrode plate E.

At this time, although the mandrel assembly 100 moves down further from a set location (i.e.., the top of the electrode plate) due to an assembly tolerance or moving deviation of the mandrel assembly 100 or a location deviation between the stacking table 200 and the mandrel assembly 100, pressure that is applied to the mandrel 121 can be offset to some extent because the mandrel mounting part 120 is rotated at a predetermined angle in a direction (i.e., a clockwise direction) opposite a set rotation direction (i.e., a counterclockwise direction) at an initial default value while compressing the air cushion 142. Accordingly, the mandrel 121 can smoothly perform the function for clamping the electrode plate E, that is, a major function of the mandrel 121, because the mandrel 121 elastically behaves only within its elastic limit range and grasps the electrode plate E by pressing the top of the electrode plate E in a wide contact area. Accordingly, a phenomenon in which the stacking of the electrode plate collapses due to the twisted alignment of the electrode plate or the detachment of the electrode plate because the mandrel does not properly grasp the electrode plate as in the conventional technology can be prevented.

Furthermore, in the process of the mandrel 121 moving down and pressurizing the electrode plate E, excessive pressure can be prevented from being applied to the electrode plate E because the mandrel mounting part 120 is clockwise rotated around the hinge part 130 by a reaction to the pressurization and can absorb the pressurization that is applied to the electrode plate E through the mandrel 121 to some extent. Accordingly, a mandrel mark can be prevented from occurring because the electrode plate E is pressed by great pressure of the mandrel 121.

Furthermore, when the mandrel mounting part 120 is clockwise rotated due to a reaction according to a contact between the mandrel 121 and the electrode plate E, the mandrel mounting part 120 can be prevented from being excessively rotated clockwise because the contact stage 123A on the rear side of the mandrel mounting part 120 is downward moved while elastically compressing the air cushion 142 to a predetermined level. Accordingly, a problem, such as that the alignment of the electrode plate E is twisted or the electrode plate E is detached because the mandrel mounting part 120 is excessively rotated clockwise and thus the mandrel 121 does not properly press the electrode plate E, can also be prevented.

Although the preferred embodiments of the present disclosure have been described above, the scope of the present disclosure is not limited to such specific embodiments, and a person having ordinary knowledge in the art may properly change the present disclosure within a category that is written in the claims of the present disclosure.

### [Description of reference numerals]

| | | | |
|---|---|---|---|
| 100: | mandrel assembly | 110: | moving block |
| 112: | protrusion stage | 115: | passage |
| 120: | mandrel mounting part | 121: | mandrel |
| 122: | upper plate | 123: | lower plate |
| 123A: | contact stage | 124: | rotation body |
| 125: | ball hinge coupling part | 130: | hinge part |
| 131: | ball hinge | 132: | ball hinge housing |
| 133: | fixing plate | 134: | coupling member |
| 140: | pressurization part | 141: | support |
| 142: | air cushion | 150: | guide member |
| 160: | air supply means | 200: | stacking table |
| E: | electrode plate | S: | space part |

## Claims

1. A mandrel assembly comprising:
a moving block;
a mandrel mounting part provided with a mandrel and mounted on the moving block;
a hinge part configured to rotatably couple the mandrel mounting part to the moving block; and
a pressurization part configured to elastically pressurize one side of the mandrel mounting part so that the mandrel is tilted at a predetermined angle to an electrode plate.

2. The mandrel assembly of claim 1, further comprising a contact stage extended and formed on a rear side of the mandrel mounting part and configured to come into contact with the pressurization part.

3. The mandrel assembly of claim 1, wherein the hinge part comprises:
a ball hinge coupled to a bottom of the mandrel mounting part, and
a hinge housing fixed to the moving block and having the ball hinge rotatably received therein.

4. The mandrel assembly of claim 1, wherein a guide member configured to provide guidance to a rotation direction of the mandrel mounting part is installed in the moving block.

5. The mandrel assembly of claim 3, wherein a ball hinge coupling part that is coupled to the ball hinge through the ball hinge is formed at the bottom of the mandrel mounting part.

6. The mandrel assembly of claim 5, further comprising a coupling member having a greater diameter than the ball hinge coupling part and coupled to a bottom of the ball hinge.

7. The mandrel assembly of claim 1, wherein a gap is formed between a bottom of the mandrel mounting part and a top of the moving block.

8. The mandrel assembly of claim 1, wherein the pressurization part pressurizes the mandrel mounting part by using air.

9. The mandrel assembly of claim 2, wherein the pressurization part comprises:
a support fixed to a top of the moving block disposed under the contact stage, and
an air cushion made of an elastically deformable material, coupled to the support, filled with air, and configured to come into contact with a bottom of the contact stage.

10. The mandrel assembly of claim 9, further comprising an air supply means for supplying the air into the air cushion.
